# EUROPÄISCHE PATENTSCHRIFT

(11) **EP 0 980 287 B1**
(45) Veröffentlichungstag und Bekanntmachung des Hinweises auf die Patenterteilung: **22.08.2001**
(21) Anmeldenummer: 98925545.0
(22) Anmeldetag: 06.05.1998
(51) Int. Cl.: B01J 8/00

(54) **VERFAHREN ZUR EINSTELLUNG EINER ZIRKULIERENDEN WIRBELSCHICHT UND VERWENDUNG DES VERFAHRENS**
PROCESS FOR REGULATING A CIRCULATING FLUIDISED BED AND USE OF THE PROCESS
PROCEDE POUR REGLER UN LIT FLUIDISE EN CIRCULATION ET UTILISATION DU PROCEDE

(30) Priorität: 07.05.1997 DE 19719481
(43) Veröffentlichungstag der Anmeldung: 23.02.2000
(73) Patentinhaber: mg technologies ag, 60325 Frankfurt am Main (DE); Bayer Aktiengesellschaft, 51368 Leverkusen (DE)
(72) Erfinder: SCHMIDT, Hans-Werner, D-60599 Frankfurt am Main (DE); RAHN, Martin, D-60433 Frankfurt am Main (DE); HEISSWOLF, Horst, D-60437 Frankfurt am Main (DE); SCHNELL, Marc, D-56584 Meinborn (DE); ERKES, Bernd, D-41379 Brüggen (DE)
(74) Vertreter: Revesz, Veronika
(86) Internationale Anmeldenummer: EP9802668
(87) Internationale Veröffentlichungsnummer: WO9850142

(56) Entgegenhaltungen:
- EP-A- 0 501 542
- EP-A- 0 543 757
- EP-A- 0 549 252
- EP-A- 0 685 449
- FR-A- 2 137 441
- US-A- 4 042 376
- US-A- 4 144 316
- US-A- 4 334 898

## Beschreibung

Die Erfindung betrifft ein Verfahren zur Einstellung einer zirkulierenden Wirbelschicht sowie die Verwendung des Verfahrens.

Verfahren zur Einstellung einer zirkulierenden Wirbelschicht sind bekannt. In E. Henglein, Lexikon Chemische Technik, VCH Verlagsgesellschaft, 1988, Seiten 676 bis 678, werden Wirbelschicht-Verfahren, unter anderem auch die Funktionsweise einer zirkulierenden Wirbelschicht, beschrieben. Dabei wird herausgestellt, daß das Trägergas dem Reaktor von unten zugeführt wird. Aus E. Henglein, Lexikon Chemische Technik, VCH Verlagsgesellschaft, 1988, Seite 267, ist es bekannt, daß die kontinuierliche Vermischung zweier Gase in vorteilhafter Weise mit einem Injektormischer durchgeführt werden kann.

Bekannt ist ebenfalls eine Vorrichtung zur Herstellung pulverisierten Siliciumnitrids. Die Herstellung erfolgt dabei in einer Wirbelschicht, wobei als Trägergas zum Aufbau des Wirbelbettes Stickstoff eingesetzt wird.

Ferner ist die Verfahrensweise bekannt, bei der als Trägergas mindestens ein Teilstrom des aus dem Zyklon der zirkulierenden Wirbelschicht abgeführten Reingases eingesetzt wird. In der Regel wird das Reingas mit Hilfe eines Drehkolbengebläses vom Zyklon abgeführt und dem Reaktor von unten erneut zugeführt. In der Regel enthalten die im Reaktor entstehenden Gase eine größere Menge an sauren Komponenten, vornehmlich HCL und SO₂. Diese sauren Komponenten führen bei den Prozeßtemperaturen jedoch relativ schnell zu einer korrosiven Schädigung der Anlagenteile, besonders des- eingesetzten Drehkolbengebläses. Außerdem müssen die Reingase unter den Taupunkt abgekühlt werden, bevor sie durch das Drehkolbengebläse geleitet werden. Die im Taupunkt befindlichen Gase enthalten im Sprüh größere Anteile an Salzen an der Sättigungsgrenze, die bei der Verdichtung im Drehkolbengebläse ausfallen, anbacken und das Drehkolbengebläse nach relativ kurzer Betriebszeit blockieren.

Der Erfindung liegt daher die Aufgabe zugrunde, ein Verfahren zur Einstellung einer zirkulierenden Wirbelschicht zu schaffen, bei dem korrosive Schädigungen der Anlagenteile und Schädigungen durch Ausfällen von Salzen weitgehend vermieden werden.

Die der Erfindung zugrunde liegende Aufgabe wird durch ein Verfahren zur Einstellung einer zirkulierenden Wirbelschicht gelöst, bei dem als Teilmenge des Trägergases mindestens ein Teilstrom des aus dem Zyklon abgeführten Reingases an mindestens einer Stelle der zirkulierenden Wirbelschicht eingesetzt wird und das als Teilmenge des Trägergases eingesetzte Reingas vor der Zuleitung in die zirkulierende Wirbelschicht mit 10 bis 90 Gew.-% Treibgas, bezogen auf die Menge des Teilstroms des aus dem Zyklon abgeführten Reingases, in einem Injektormischer vermischt wird und die Mischung als Trägergas der zirkulierenden Wirbelschicht zugeführt wird. Als Treibgas werden beispielsweise N₂, Luft oder Wasserdampf eingesetzt.

Unter der Bezeichnung "zirkulierende Wirbelschicht" ist eine Wirbelschicht mit starker Feststoffbewegung, hoher Expansion, interner Rückvermischung, hoher Feststoffkonzentration am Reaktoraustritt unter teilweiser Rückführung des Feststoffes zu verstehen. Sie besteht im wesentlichen aus einem vertikal angeordneten Reaktor, einem nachgeschalteten Zyklon sowie aus einer Rückführleitung zur Rückführung von aus dem Zyklon abgeführten Feststoffen in den Reaktor.

Unter der Bezeichnung "Injektormischer" sind die allgemein bekannten Injektoren zu verstehen. Bei diesen Injektoren wird der eine Mischungspartner zentral mit hoher Geschwindigkeit in eine Mischstrecke eingegeben, während der zweite Gasstrom über einen verbleibenden Ringspalt in die Strecke eintritt. Bedingt durch die hohen Strömungsgeschwindigkeiten und die Geschwindigkeitsdifferenz am Eintrittsort, herrscht in der Mischstrecke eine starke Turbulenz, so daß eine kontinuierliche Vermischung der beiden Gase stattfinden kann.

Die Zuführung der Mischung erfolgt mindestens an einer Stelle der zirkulierenden Wirbelschicht. Die Mischung kann beispielsweise dem Reaktor der zirkulierenden Wirbelschicht von unten zugeführt werden. Es ist jedoch auch möglich, die Mischung an einer Stelle der Rückführleitung für die Feststoffe zwischen Zyklon und Reaktor zuzuführen.

Es hat sich in vorteilhafter Weise gezeigt, daß durch die erfindungsgemäße Vermischung des Reingases mit dem Stickstoff korrosive Schädigungen in den Anlagenteilen und Schädigungen durch Ausfällen von Salzen weitgehend vermieden werden können. Ein weiterer Vorteil besteht darin, daß auf die Anordnung eines Drehkolbengebläses vollständig verzichtet werden kann. Das als Trägergas eingesetzte Reingas kann dabei ohne vorherige Kühlung durch den Injektormischer geleitet und dem Reaktor erneut zugeführt werden, so daß im Vergleich zum Einsatz eines Drehkolbengebläses die Kühlanlage für das Reingas, die Kühlenergie und Heizkosten eingespart werden. Der Vordruck des Treibgases, der in der Regel bei ca. 2 bis 50 bar, vorzugsweise 3 bis 25 bar, liegt, sowie der Druck im Reaktor, reichen dabei in vorteilhafter Weise aus, die Teilmenge des als Trägergas einzusetzenden Reingases über den Injektormischer zum Reaktor zu transportieren.

Eine bevorzugte Ausgestaltung der Erfindung besteht darin, daß die vom Zyklon abzuführenden Feststoffe mindestens teilweise durch eine U-förmige Rückführleitung geleitet und dem Reaktor erneut zugeführt werden und die Mischung mindestens teilweise in den unteren Teil der U-förmigen Rückführleitung geleitet wird. Die U-förmige Rückführleitung kann dabei konstruktiv als Siphon gestaltet sein. Die Einleitung von mindestens einer Teilmenge der Mischung in den unteren Teil der U-förmigen Rückführleitung führt zum vorteilhaften Aufbau einer weiteren Wirbelschicht im unteren Teil der U-förmigen Rückführleitung. Bei dieser Verfahrensweise ist es möglich, als Trägergas zum Aufbau der Wirbelschicht im Reaktor andere Gase, beispielsweise Stickstoff, einzusetzen. Es ist jedoch auch durchaus möglich, einen Teil der Mischung in den unteren Teil der U-förmigen Rückführleitung einzuleiten und den zweiten Teil der Mischung als Trägergas dem Reaktor von unten zuzuführen. Wird die Mischung mindestens teilweise in den unteren Teil der U-förmigen Rückführleitung geleitet, so ist es in vorteilhafter Weise möglich, korrosive Schädigungen in den Anlagenteilen und Schädigungen durch Ausfällen von Salzen zu vermeiden, wobei auch hier auf die Anordnung eines Drehkolbengebläses verzichtet werden kann. Ein weiterer Vorteil dieser Verfahrensweise liegt darin, daß durch die Einleitung mindestens einer Teilmenge der Mischung in den unteren Teil der U-förmigen Rückführleitung auf eine relativ einfache Weise ein Druckausgleich zwischen dem Reaktor und dem Zyklon realisiert werden kann. Gleichzeitig wird der Transport der Feststoffe zwischen dem Zyklon und dem Reaktor in der Rückführleitung.in vorteilhafter Weise erleichtert.

Gemäß einer weiteren Ausgestaltung der Erfindung ist vorgesehen, daß 3 bis 10 % der Mischung in den unteren Teil der U-förmigen Rückführleitung geleitet werden. Der restliche Teil der Mischung wird dabei in vorteilhafter Weise dem Reaktor von unten als Trägergas zugeführt. Auf diese Weise wird der jeweilige Aufbau des Wirbelbetts im Reaktor beziehungsweise in der Rückführleitung optimiert, wobei gleichzeitig korrosive Schädigungen und Schädigungen durch Salzablagerungen in den Anlagenteilen vermieden werden können.

Gegenstand der Erfindung ist schließlich die Verwendung des Verfahrens zur Herstellung von Fe₂O₃ oder Fe₃O₄. Es ist allgemein bekannt, Fe₂O₃ (Rotpigment) oder Fe₃O₄ (Schwarzpigment) in der zirkulierenden Wirbelschicht herzustellen. Die Herstellung von Fe₂O₃ erfolgt dabei in oxidierender Atmosphäre. Die Herstellung von Fe₃O₄ erfolgt in neutraler beziehungsweise in schwach reduzierender Atmosphäre. Die dabei eingesetzten Rohpigmente enthalten jedoch einen relativ großen Anteil an Chlor und Schwefel, der im Reaktor der zirkulierenden Wirbelschicht zu HCl und SO₂ umgesetzt wird. Wird ein Teilstrom des aus dem Zyklon abgeführten Reingases als Trägergas zum Aufbau der Wirbelschicht eingesetzt, so führt das HCl- und SO₂-haltige Reingas zu korrosiven Schädigungen der Anlagenteile. Aufgrund dieser Tatsache ist auch der Einsatz eines Drehkolbengebläses, beispielsweise zum Transport des Reingases vom Zyklon erneut in den Reaktor, nur kurzfristig möglich, da das Drehkolbengebläse aufgrund von Salzablagerungen und der korrosiven Schädigungen, bedingt durch die sauren Komponenten und die relativ hohen Prozeßtemperaturen, bereits nach relativ kurzen Betriebszeiten nicht mehr betriebsfähig ist. Das korrosive Gas macht nämlich ein Betreiben des Drehkolbengebläses nur mit extrem hohem Aufwand (Kühlung, Schadgaswäsche, Kondensation und Sprühentfernung des Reingases vor Eintritt in das Drehkolbengebläse, Einsatz teurer Werkstoffe) möglich. Die Herstellung von Fe₂O₃ oder Fe₃O₄ kann jedoch durch die Verwendung des Verfahrens vorteilhaft realisiert werden.

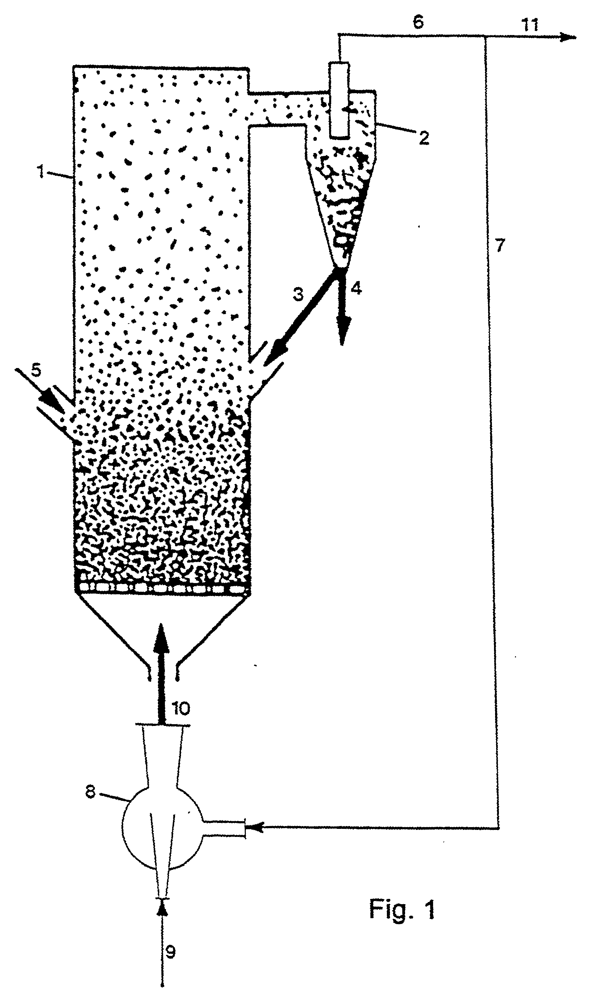

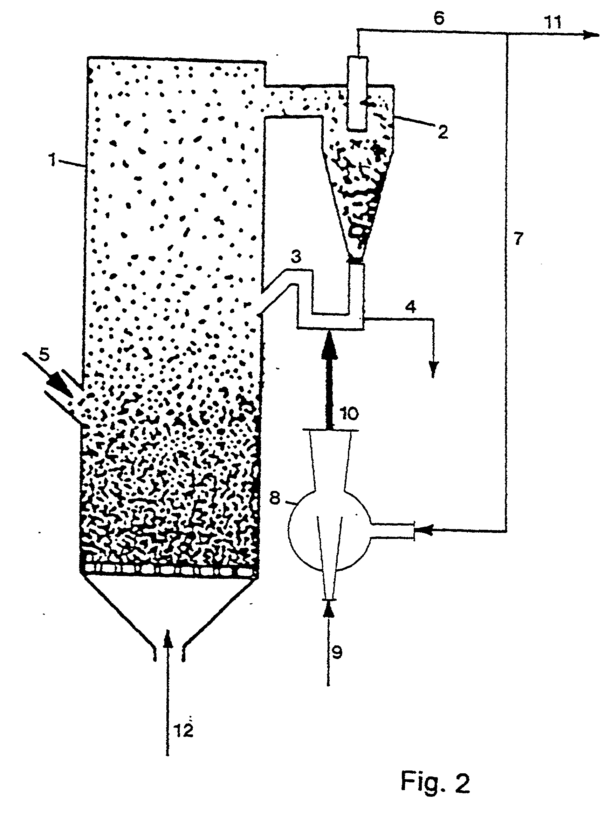

Die Erfindung wird nachfolgend anhand der Zeichnung (Fig. 1, Fig. 2) näher und beispielhaft erläutert.

Fig. 1 zeigt ein schematisches, vereinfachtes Fließbild des Verfahrens zur Einstellung einer zirkulierenden Wirbelschicht.

Fig. 2 zeigt ein schematisches, vereinfachtes Fließbild einer Variante des Verfahrens zur Einstellung einer zirkulierenden Wirbelschicht.

In Fig. 1 ist das Verfahren zur Einstellung einer zirkulierenden Wirbelschicht in Form eines Fließbildes dargestellt. Dem vertikal angeordneten Reaktor (1) ist ein Zyklon (2) nachgeschaltet, der ferner über die Rückführleitung (3) mit dem Reaktor (1) verbunden ist. Im Zyklon (2) werden die mitgerissenen Feststoffe abgeschieden und teilweise über die Leitung (4) aus dem System abgeführt. Eine solche zirkulierende Wirbelschicht eignet sich in vorteilhafter Weise zur Herstellung von Fe₂O₃ oder Fe₃O₄, wobei das Rohpigment, das in der Regel Mengen an Chlor und Schwefel enthält, über die Leitung (5) in das System eingebracht wird. Das aus dem Zyklon (2) abgeführte Reingas wird über die Leitung (6) abgeführt und teilweise über die Leitung (11) ebenfalls aus dem System entfernt. Ein Teilstrom des Reingases wird jedoch über die Leitung (7) dem Injektormischer (8) zugeführt. Dem Injektormischer (8) wird ferner Stickstoff als Treibgas über die Leitung (9) zugeführt, der in der Regel mit einem Vordruck von ca. 2 bis 50 bar vorzulegen ist. Im Injektormischer (8) wird die Teilmenge des als Trägergas eingesetzten Reingases mit dem Stickstoff vermischt. Die Mischung wird anschließend als Trägergas über die Leitung (10) dem Reaktor (1) von unten zugeführt.

Fig. 2 zeigt eine Variante des Verfahrens zur Einstellung einer zirkulierenden Wirbelschicht in Form eines schematischen, vereinfachten Fließbildes. Im Unterschied zu der in Fig. 1 dargestellten Verfahrensweise ist es dabei vorgesehen, die Rückführleitung (3) zwischen Zyklon (2) und Reaktor (1) U-förmig zu gestalten. Die aus dem Injektormischer (8) abgeführte Mischung wird über die Leitung (10) in den unteren Teil der U-förmigen Rückführleitung (3) eingeleitet. Im unteren Teil der U-förmigen Rückführleitung (3) bildet sich dabei ein weiteres Wirbelbett aus, wobei der Transport der Feststoffe zwischen dem Zyklon (2) und dem Reaktor (1) in der Rückführleitung (3) in vorteilhafter Weise erleichtert wird. Zum Aufbau der Wirbelschicht im Reaktor (1) wird bei dieser Verfahrensweise ein anderes Trägergas, beispielsweise reiner Stickstoff, über die Leitung (12) von unten in den vertikalen Reaktor (1) eingetragen.

Es ist natürlich auch möglich, die in den Fig. 1 und 2 dargestellten Verfahrensweisen zu kombinieren, so daß ein Teil der Mischung von unten in den Reaktor (1) eingeleitet wird und ein anderer Teil der Mischung in den unteren Teil der U-förmigen Rückführleitung (3) geleitet wird.

## Patentansprüche

1. Verfahren zur Einstellung einer zirkulierenden Wirbelschicht, bei dem als Teilmenge des Trägergases mindestens ein Teilstrom des aus dem Zyklon (2) abgeführten Reingases an mindestens einer Stelle der zirkulierenden Wirbelschicht eingesetzt wird und das als Teilmenge des Trägergases eingesetzte Reingas vor der Zuleitung in die zirkulierende Wirbelschicht mit 10 bis 90 Gew.-% Treibgas, bezogen auf die Menge des Teilstroms des aus dem Zyklon (2) abgeführten Reingases, in einem Injektormischer (8) vermischt wird und die Mischung als Trägergas der zirkulierenden Wirbelschicht zugeführt wird.

2. Verfahren nach Anspruch 1, bei dem die vom Zyklon (2) abzuführenden Feststoffe mindestens teilweise durch eine U-förmige Rückführleitung (3) geleitet und dem Reaktor (1) erneut zugeführt werden und die Mischung mindestens teilweise in den unteren Teil der U-förmigen Rückführleitung (3) geleitet wird.

3. Verfahren nach Anspruch 2, bei dem 3 bis 10 % der Mischung in den unteren Teil der U-förmigen Rückführleitung (3) geleitet werden.

4. Verwendung des Verfahrens nach einem der Ansprüche 1 bis 3 zur Herstellung von Fe₂O₃ oder Fe₃O₄.

## Claims

1. A method for adjusting a circulating fluidised bed system, in which at least one partial stream of the pure gas removed from the cyclone (2) is used as a partial quantity of the carrier gas at at least one point of the circulating fluidised bed system and the pure gas used as a partial quantity of the carrier gas before feeding into the circulating fluidised bed system is mixed with 10 to 90% by weight propelling gas, relative to the quantity of the partial stream of the pure gas withdrawn from the cyclone (2), in an injector mixer (8) and the mixture is fed as carrier gas to the circulating fluidised bed system.

2. A method according to Claim 1, in which the solids to be removed by the cyclone (2) are passed at least in part through a U-shaped return line (3) and are fed back to the reactor (1) and the mixture is passed at least in part into the lower part of the U-shaped return line (3).

3. A method according to Claim 2, in which 3 to 10% of the mixture is passed into the lower part of the U-shaped return line (3).

4. The use of the method according to one of Claims 1 to 3 for the preparation of Fe₂O₃ or Fe₃O₄.

## Revendications

1. Procédé pour régler un lit fluidisé en circulation, dans lequel on utilise, comme quantité partielle du gaz porteur, au moins un courant partiel du gaz épuré sortant du cyclone (2) en au moins un point du lit fluidisé en circulation et on mélange dans un mélangeur (8) à injecteur le gaz épuré utilisé en tant que quantité partielle du gaz porteur, avant l'entrée dans le lit fluidisé en circulation, à 10 à 90% en poids de gaz d'entraînement, rapporté à la quantité du courant partiel du gaz épuré sortant du cyclone (2), et on envoie le mélange en tant que gaz porteur au lit fluidisé en circulation.

2. Procédé suivant la revendication 1, dans lequel on envoie les matières solides évacuées du cyclone (2) au moins en partie dans un conduit (3) de retour en forme de U et on les envoie à nouveau au réacteur (1) et on fait passer le mélange au moins en partie dans la partie inférieure du conduit (3) de recyclage en forme de U.

3. Procédé suivant la revendication 2, dans lequel on fait passer de 3 à 10% du mélange dans la partie inférieure du conduit (3) de retour en forme de U.

4. Utilisation du procédé suivant l'une des revendications 1 à 3, pour la préparation de Fe₂O₃ ou de Fe₃O₄.
